# EUROPEAN PATENT APPLICATION

(11) **EP 1 574 245 A2**
(43) Date of publication of application: **14.09.2005**
(21) Application number: 05004616.8
(22) Date of filing: 03.03.2005
(51) Int. Cl.: B01D 53/02, B01D 53/58

(54) **A device for separating evaporated particles from a gas**

(30) Priority: 09.03.2004 SE 0400591
(71) Applicant: Klapparvik Holding AB, SE-826 40 Söderhamn (SE)
(72) Inventor: Persson, Kjell, SE-826 94 Norrala (SE)
(74) Representative: Fröderberg, Anders Oskar

(57) **Abstract**

In a first aspect, the invention relates to a device for the separation of evaporated particles from a gas, comprising a house, which includes an inlet opening and an outlet opening, the house accommodating a filter (9) arranged between these openings, through which filter the gas can pass. Furthermore, the filter (9) is tubular and extends between first and second end portions (3,4) included in the house, the inlet opening being arranged in the first end portion (3) and mouthing radially inside the interior envelope surface of the filter (9). Significant for the invention is that a border projects from the second end portion (4) in a space in the filter (9).

## Description

### Technical Field of the Invention

In a first aspect, this invention relates to a device for the separation of evaporated particles from a gas, comprising a house, which includes an inlet opening and an outlet opening, the house accommodating a filter arranged between the same openings, through which filter the gas can pass, the filter being tubular and extends between first and second end portions included in the house, the inlet opening being arranged in a first end portion and mouthing radially inside the interior envelope surface of the filter.

### Background of the Invention

In all activities and constructions that include wells, grease traps, sewage systems, refuse storage rooms, compost installations or the like, some kind of organic material decays, which thereby is evaporated and forms different fumes, which for instance smell of ammonia or rotten eggs. By virtue of the volume expansion of gases during the processes of decay in progress and in order to prevent dangerous fumes from being accumulated in the above-mentioned systems, the systems should be provided with some kind of air purger. This is solved most easily by providing an opening between the interior of the system and the surrounding air, through which opening the air and the fumes can be let off. However, the smell from a refuse storage room or a sewer system, in particular on a warm day, may become very disturbing and unpleasant. Consequently, there is a need for removing the smell or odour that arises, and in order to handle smell problems, an odour trap is usually used. Roughly speaking, odour traps comprises a filter, in the form of an adsorbing material or the like, which is placed in an opening between the interior of the system and the surrounding air. However, previously known odour traps have had mediocre function under different conditions.

An odour trap's capability of separating smell or evaporated particles from an air is depending on the amount of adsorbing material in the filter, as well as on the dwell time of the air in the filter. As is realized, also the function of the odour trap comes into play on the choice of adsorbing material. The amount of adsorbing material depends on the size of the filter. The dwell time of the air in the filter is affected by the flow rate of the air and the flow area of the filter and the choice of adsorbing material depends on which smell or which evaporated particles that are to be separated.

From the system that is to be vented, a blowpipe usually projects. According to prior technology, a rubber bushing has been placed in the opening of the blowpipe, wherein a second pipe or house has been applied in a through hole in the bushing. Usually, said house has a smaller diameter than the blowpipe in order to be able to be accommodated in the same physically. However, an additional ancillary device may be mounted on the blowpipe to expand the same, wherein said house can be made somewhat larger than the blowpipe. The house comprises an inlet opening and an opposite outlet opening. In the areas of these openings, flat, circular gratings have been applied, which together with the house define an elongate, cylindrical space, in which the adsorbing material can be accommodated. Further, a cap is applied above the outlet opening, in order to counteract that, for instance, leaves fall down and foul the opening or that it rains in through the outlet opening. Thus, the function of the odour trap is that the air is brought to pass axially through an elongate, cylindrical house, in which a filter is placed.

Previously known odour traps of the above-described type have to comprise a plurality of rubber bushings of varying size to allow the same to be applied in blowpipes of different diameters. Simultaneously, the outer diameter of the house is set to fit blowpipes of smallest possible inner diameter. A significant disadvantage is that the amount of adsorbing material that consequently can be accommodated in such an odour trap is utmost limited. Due to the usage of an inadequate amount of adsorbing material, an insufficient function is obtained. As a consequence of the blowpipe usually having two to four times as large flow area as the filter, the air passes unfavourably fast through the filter, which may lead to poor separation of the smell.

Upon emptying of, for instance, a well or a grease trap, air has to replace the volume of the amount of sludge sucked out. The replacement air is sucked backward through the blowpipe. Frequently, a sludge suction equipment is used, which empties the system by a great force and at a high speed, which may create a negative pressure if the odour trap in the blowpipe has too a small flow area. A great negative pressure may in turn entail that components in the odour trap as well as in other parts of the system are subjected to unnecessary loads.

### Objects and Features of the Invention

The present invention aims at obviating the above-mentioned disadvantages of previously known devices, and at providing an improved device. A primary object of the invention is to provide a device, which provides means for the air to stay a desired time in the filter. It is also an object of the invention to provide a device, which within a limited area can accommodate a sufficient amount of adsorbing material. It is also an object of the invention to provide a device, which does not affect or is affected by the emptying of a system in a negative way. Another object of the invention is to provide a device that is independent of the diameter of the blowpipe. Yet an object of the invention is to provide a device, which in its entirety can be used for energy recovery, without the need of dismounting.

According to the invention, at least the primary object is attained by means of the device defined by way of introduction, which device is characterized in that the filter is tubular and extends between first and second end portions included in the house, the inlet opening being arranged in a first end portion and mouthing radially inside the interior envelope surface of the filter. Preferred embodiments of the device according to the invention are further seen in the dependent claims 2-9, as well as the subsequent, detailed description.

### Brief Description of the Appended Drawings

In the drawings:
- Fig. 1: is a perspective exploded view of an odour trap according to the invention,
- Fig. 2: is a longitudinal section of an assembled odour trap,
- Fig. 3: is a longitudinal section, in perspective as seen from below, of a shell included in the odour trap,
- Fig. 4: is a cut perspective view as seen from below of an end portion included in the odour trap,
- Fig. 5: is a cut perspective view as seen from above of a connection unit included in the odour trap, and
- Fig. 6: is a perspective view of two grating elements positioned in order to be assembled together.

### Detailed Description of a Preferred Embodiment of the Invention

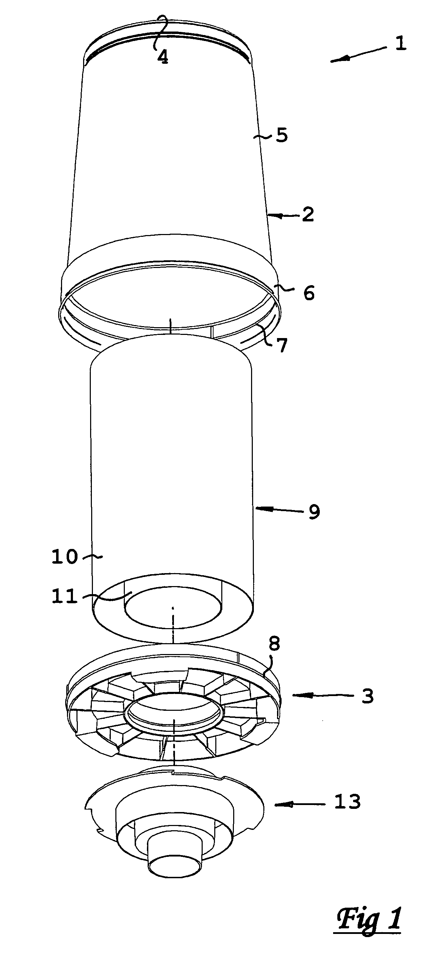

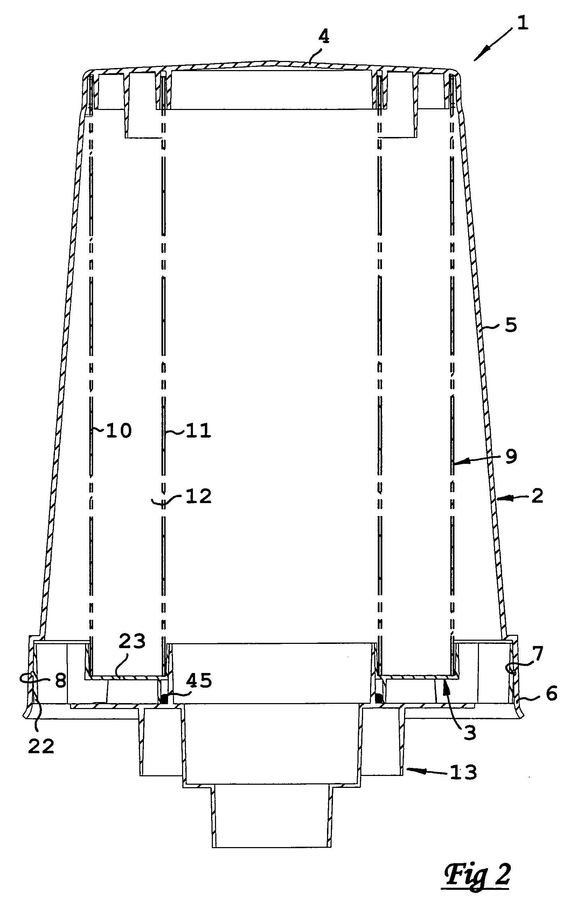

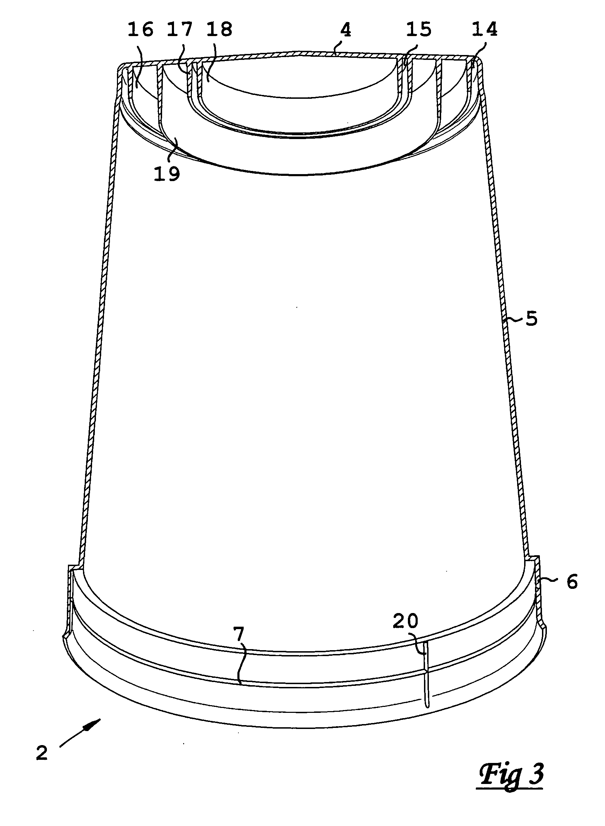

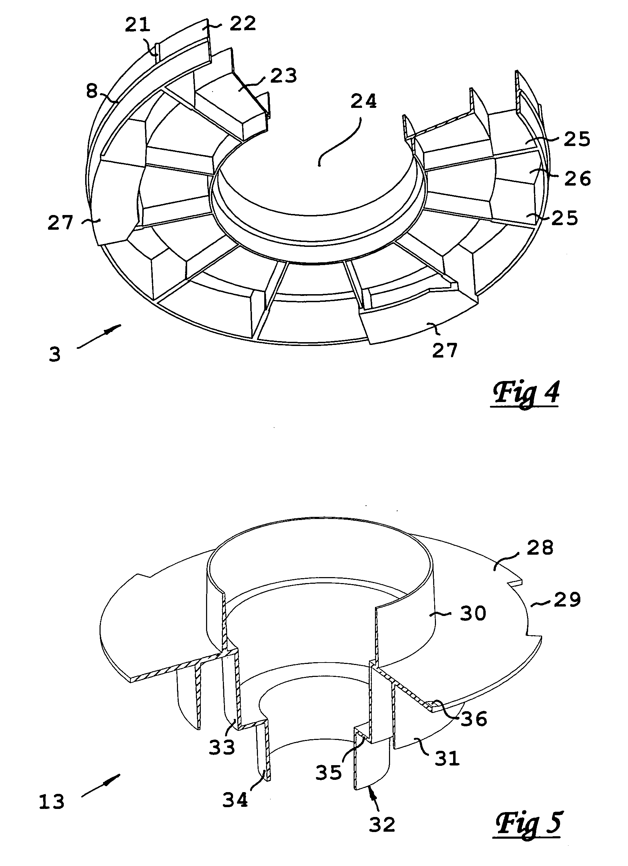

In figures 1 and 2, a separator device or odour trap according to the invention is shown, generally designated 1. The odour trap 1 comprises a shell 2 and an end portion 3 releasably connected to the shell 2, which together form a house. The shell 2 comprises an end portion or a roof 4, from which a cross-section-wise circular wall shell 5 extends, which widens in the direction from the roof 4 to a lower end, which forms a seat 6 for the end portion 3. On the inside of the wall shell 5, the seat 6 includes a circumferential score 7, which co-operates with a corresponding circumferential ridge 8, which runs along the periphery of the end portion 3 (see also figures 3 and 4). Furthermore, the odour trap 1 comprises a tubular filter in its entirety designated 9, which in a mounted state extends between the roof 4 and the end portion 3. The filter 9 includes a first, tubular grating 10, which is radially remote from a second, tubular grating 11. Advantageously, these gratings 10, 11 are concentrically arranged. An adsorbing material is inserted in a space 12, which in the radial direction is limited by the gratings 10 and 11 and in the axial direction by the roof 4 and the end portion 3. Furthermore, the odour trap 1 comprises a unit 13, for the connection of the same to a blowpipe (not shown), which projects upward from a well, a refuse storage room or the like.

Now reference is made also to figure 3. In the roof 4 of the shell 2, two ring-shaped grooves 14 and 15 are arranged, in which the upper ends of the gratings 10, 11 are insertable. The groove 14 is delimited by the wall shell 5 and a collar 16, which is concentric with the wall shell 5 and projects from the roof 4 in the direction of the lower end of the shell 2. The groove 15 is defined in the similar way by two concentric collars 17, 18, which project from the roof 4 in the axial direction downward. The purpose of the collars 16, 17, 18 is to position the gratings 10, 11 and orientate the same in the desired direction. Preferably, the thickness of the gratings 10, 11 is somewhat larger than the width of the grooves 14, 15, so that the gratings by press fit should be kept in the respective groove. Furthermore, a border 19 projects from the roof 4, more precisely in the space 12. The function of the border 19 is to prevent the possibility of the formation of a free passage in the filter 9, if the adsorbing material, which is placed in the space 12, would collapse. Therefore, on one hand, the border 19 should protrude at least 15 mm, preferably at least 25 mm. On the other hand, the border 19 should maximally protrude 40 mm, preferably maximally 30 mm, since the border 19 also intrudes on the flow area of the filter 9 and thereby limits the amount of air that can pass through the filter 9. In the seat 6 of the shell 2, in addition to the circumferential score 7, also a number of axial scores 20 are arranged, preferably three, which co-operate with a corresponding number of ridges 21, which extend axially along the periphery of the end portion 3 (see figure 4).

Now reference is made also to figure 4. The end portion 3 comprises a border 22, on the outside of which the axial ridges 21 and the circumferential ridge 8 are arranged. At a distance radially inside the border 22, a ring-shaped profile 23 is arranged, which has an essentially U-shaped cross-section. Furthermore, the profile 23 is oriented in such a way that the opening in the U-shaped profile, when the end portion 3 is mounted in the shell 2, is directed toward the roof 4 (see figure 2). The purpose of the profile 23 is to position the lower end of the filter 9, the U-shaped opening of the profile 23 corresponding with the thickness of the filter 9. Radially inside the profile 23, a central inlet opening 24 is formed, through which the air can flow into the odour trap 1. The profile 23 and the border 22 define together a ring-shaped outlet opening 26, through which the air can flow out of the odour trap 1. Transverse to the outlet opening 26, a number of equidistantly spaced-apart reinforcing elements 25 extend, which connect the border 22 and the profile 23 to each other. To the border 22, three equidistantly remote lock plates 27 are also connected, which extend radially inward from the border 22 and the common horizontal, extension plane of which is arranged on a level below the border 22 and the reinforcing elements 25. The lock plates 27 are arranged to co-operate with the connection unit 13, like a bayonet fitting.

Now reference is made also to figure 5. The connection unit 13 comprises a pipe, generally designated 32, and a brim 28 protruding from the pipe 32, which brim in the periphery thereof has three recesses 29, for the co-operation with the lock plates 27 in the end portion 3. In the axial direction upward from the brim 28, a part pipe 30 included in the pipe 32 extends, the outer diameter of which is smaller than the diameter of the inlet opening 24, the part pipe being insertable in said inlet opening 24. On the bottom side of the brim 28, in the opposite direction of the part pipe 30, a pipe socket 31 protrudes, which is radially distanced from the pipe 32. Underneath the brim 28, the pipe 32 includes two part pipes 33 and 34, which are axially spaced-apart by a flange 35. The part pipe 33 closest to the brim 28 has a larger outer diameter than the part pipe 34. Preferably, the outer diameter of the part pipe 34 is about 50 mm, the outer diameter of the part pipe 33 about 75 mm, and the outer diameters of the pipe socket 31 about 110 mm, in order to allow the unit to be connected to blowpipes of conventional standard dimensions. However, it should be pointed out that the above-mentioned part pipes 33, 34 and the pipe socket 31 may have other suitable outer diameters, which fit blowpipes having other standard measures.

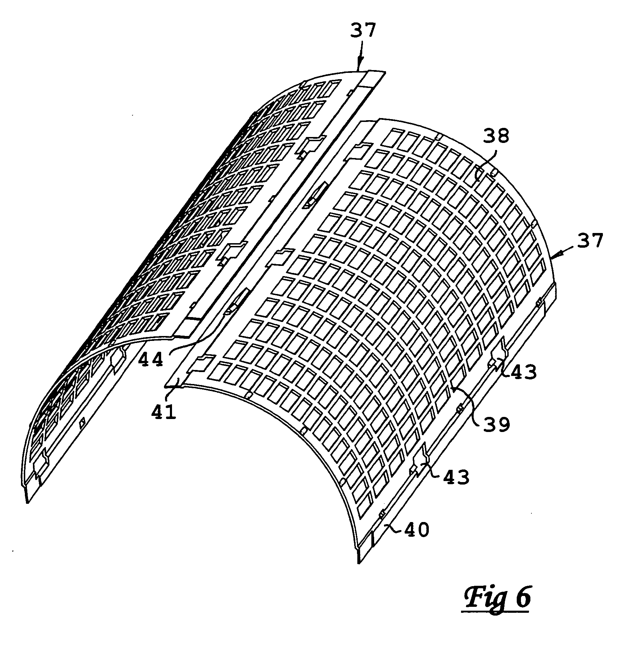

Now reference is made also to figure 6, which shows two flexible, uniform grating elements 37, positioned in order to be assembled together. In the example illustrated in figure 1, the interior tubular grating 11 includes four grating elements 37, and the outer grating 10 seven grating elements 37. Each individual grating element 37 comprises two parallel side pieces 40, 41, between which a first set of thin, transverse rods 39 extend. Parallel to the side pieces 40, 41, a second set of thin rods 38 extend, which are connected to the first set of rods 39. In the first side piece 40, a plurality of, preferably two, holes or openings 43 are arranged. The holes 43 co-operate with a corresponding number of hooks 44, arranged on the second side piece 41 of an adjacent grating element 37. The hooks 37 are inserted into the holes 43, and then the grating elements 37 are displaced axially in relation to each other and the hooks 44 hook onto the edges of the holes 43.

In order to describe a mounting method, reference is now made again primarily to figure 2. The shell 2 is turned upside-down, after which the gratings 10 and 11 are pressed down into the grooves 14 and 15, respectively. Then the space 12 is filled with a suitable adsorbing material, for instance activated carbon, potassium permanganate, zeolite, or the like, depending on which smell, or more precisely, which type of evaporated particles that are to be separated from the air. During the filling operation, the shell 2 is preferably vibrated, in order to make the adsorbing material as compact as possible. However, it should be pointed out that said vibration is not required. When the filter 9 is filled, the end portion 3 is applied in the seat 6, more precisely by the fact that the ridges 21 run axially in the scores 20 and the filter 9 is aligned with the U-shaped opening of the profile 23. By applying an axial force to the end portion 3, the same is pressed down into the seat 6 and the ridge 8 falls down into the score 7. Now, the filter 9 is positioned between the roof 4 and the end portion 3, which turn is secured in the rotary direction as well as the axial direction in relation to the shell 2. The house is now ready to be applied to a blowpipe. Depending on which diameter the blowpipe (not shown) has, either the part pipe 33, the part pipe 34 or the pipe socket 31 of the connection unit 13 may be used. The free end of the pipe socket 31 is, in the axial direction, located nearer the brim 28 than the flange 35, which entails that if the pipe socket 31 or the part pipe 33 is to be connected to the blowpipe via, for instance, a sleeve (not shown), the pipe 32 can be cut off on level with the free end of the pipe socket 31, and thereby a larger flow area can be obtained. Independently of the diameter of the blowpipe, the house can now be applied on the connection unit 13 by the fact that the part pipe 30 is inserted in the inlet opening 24, at the same time as the recesses 29 and the lock plates 27 have to overlap each other. In order to obtain a satisfactory seal between the connection unit 13 and the end portion 3, a gasket 45 may be applied on the outside of the part pipe 30. Upon mounting, the bottom sides of the reinforcing elements 25 should be pressed against the top side of the brim 28. When the end portion 3 abuts against the brim 28, the house can be rotated in relation to the connection unit 13 so that the lock elements 27 overlap the edge of the brim 28. In practice, the requisite angle of rotation amounts to about 30°. Furthermore, on the top side of the brim 28, a nib 36 is arranged (see figure 5), which is located in such a way in relation to the recesses 29 that the same is urged over a reinforcing element 25 when the house 13 is rotated in relation to the connection unit 13. The purpose of the nib 36 is to counteract that the house shakes loose. The house has now an inlet opening 24, which mouths radially inside the interior envelope surface of the filter 9 and which is connected to the blowpipe. The house has also an outlet opening 26, which mouths radially outside the outer envelope surface of the filter 9. In other words, air can flow axially into the house via the inlet opening 24, further radially outward through the filter 9, and then again axially out through the outlet opening 26, or vice versa.

### Advantages of the Invention

A primary advantage of the separation device according to the invention is that the same, as a consequence of the tubular construction of the filter and the radial direction of flow of the air through the filter, lowers the flow rate of the air through the filter. Thus, the odour trap according to the invention allows the air to stay relatively long time in the filter. Another advantage of the device according to the invention, as a consequence of the filter being tubular, is that a sufficient amount of adsorbing material can be accommodated in the filter without the odour trap becoming disproportionately large. It is also an advantage that the flow area of the filter is many times larger than blowpipes in general, which entails that the filter does not affect or is affected, in a negative way, by high flow rates in the blowpipe. An additional advantage of the odour trap according to the invention is that the same easily can be mounted on blowpipes of different diameters, without the need of extra components. Yet an advantage of an advantageous embodiment of the invention is that the same, when it has been consumed, can be dismounted from the connection unit and be used for energy recovery in its entirety.

### Feasible Modifications of the Invention

The invention is not only limited to the embodiments described above and shown in the drawings. Thus, the device as well as the unit may be modified in a variety of ways within the scope of the subsequent claims. For instance, the filter does not need to consist of two separate tubular gratings, which in turn consist of a number of grating elements, but the filter may consist of a single cast detail of a similar shape. Although the concept "adsorbing material" for the sake of simplicity has been used, in the description as well as in the subsequent claims, it should be appreciated that also absorption or similar reactions and/or oxidations are regarded to be included without deviating from the general idea according to the invention. Consequently, it should be pointed out that the concept of adsorbing material herein should be interpreted in the widest sense thereof, and accordingly be regarded to include each form of component having the capability of fulfilling the purpose of separating one or more types of evaporated particles from air. The concept of air has also been used for the sake of simplicity and should be regarded herein to be synonymous with gas. It should also be pointed out that the different part components of the odour trap preferably are manufactured from one and the same sort of plastic, in order to facilitate recycling of the odour trap. An alternative field of application of such a separation device is in museum showcases, in which pollutants should be separated from the air that is let into the same. If unusual and/or old silver objects are kept in a showcase, which has a separation device installed, the need for polishing arises much more infrequently than if the silver objects are kept in unfiltered air. An additional alternative field of application of such a separation device is, for instance, in nail care, in fume cupboards or the like, where needs exist to separate more or less poisonous fumes. In certain fields of application, the need arises to turn the air flow, and accordingly the inlet opening and the outlet opening will change the function with each other. The prefixes "inlet" and "outlet" has for the sake of simplicity been used, in the description as well as in the subsequent claims, in order to distinguish the two openings from each other, and should consequently be regarded as interchangeable with each other.

## Claims

1. Device for the separation of evaporated particles from a gas, comprising a house, which includes an inlet opening (24) and an outlet opening (26), the house accommodating a filter (9) arranged between these openings, through which filter the gas can pass, the filter (9) being tubular and extends between first and second end portions (3, 4) included in the house, the inlet opening (24) being arranged in a first end portion (3) and mouthing radially inside the interior envelope surface of the filter (9), **characterized in that** a border (19) projects from the second end portion (4) in a space (12) in the filter (9).

2. Device according to claim 1, **characterized in that** the border (19) projects at least 15 mm.

3. Device according to claim 1 or 2, **characterized in that** the first end portion (3) is releasably connected to a shell (2) included in the house.

4. Device according to any one of claims 1-3, **characterized in that** the outlet opening (26) is arranged in said first end portion (3), and mouths radially outside the outer envelope surface of the filter (9).

5. Device according to any one of claims 1-4, **characterized in that** the filter (9) comprises a first, tubular grating (10), which is radially remote from a second, tubular grating (11), an adsorbing material being inserted in a space (12) between these.

6. Device according to claim 5, **characterized in that** each individual grating (10, 11) comprises a plurality of flexible, uniform grating elements (37).

7. Device according to any one of the preceding claims, **characterized in that** the same comprises a unit (13) co-operating with the inlet opening (24), which unit includes a pipe (32) and a brim (28) protruding radially from the same, a pipe socket (31) being connected to the brim (28) and radially distanced from the pipe (32).

8. Device according to claim 7, **characterized in that** the pipe (32) includes two part pipes (33, 34) axially spaced-apart by means of a flange (35), the part pipe (33) closest to the brim (28) having a larger extension in the radial direction than the part pipe (34) in the free end of the pipe (32).

9. Device according to claim 8, **characterized in that** the free end of the pipe socket (31) is, in the axial direction, located nearer the brim (28) than said flange (35).
